# EUROPÄISCHE PATENTSCHRIFT

(11) **EP 3 663 883 B1**
(45) Veröffentlichungstag und Bekanntmachung des Hinweises auf die Patenterteilung: **25.11.2020**
(21) Anmeldenummer: 19210049.3
(22) Anmeldetag: 19.11.2019
(51) Int. Cl.: G05D 1/02, G06Q 10/00

(54) **TRANSPORTSYSTEM FÜR WAREN UND VERFAHREN ZUM ENTFERNEN EINER HERABGEFALLENEN WARE**
GOODS TRANSPORT SYSTEM AND METHOD FOR REMOVING FALLEN GOODS
SYSTÈME DE TRANSPORT POUR MARCHANDISES ET PROCÉDÉ D'ÉLIMINATION D'UNE MARCHANDISE TOMBÉE

(30) Priorität: 07.12.2018 DE 102018131267
(43) Veröffentlichungstag der Anmeldung: 10.06.2020
(73) Patentinhaber: SICK AG, 79183 Waldkirch (DE)
(72) Erfinder: Fürstenberg, Kay, 79111 Freiburg (DE)

(56) Entgegenhaltungen:
- US-A1- 2018 053 141
- US-B1- 9 682 483
- US-B1- 9 744 665

## Beschreibung

Die Erfindung betrifft ein Transportsystem für Waren und ein Verfahren zum Entfernen einer herabgefallenen Ware oder eines sonstigen Objekts nach dem Oberbegriff von Anspruch 1 beziehungsweise 14.

In Logistikanwendungen wird ein zunehmender Anteil der Arbeiten automatisiert. Dennoch verbleiben Arbeiten, die händisch verrichtet werden. An den Schnittstellen, wo Mensch und Maschine in Kontakt kommen, sind deshalb geeignete Maßnahmen für eine Unfallvermeidung zu treffen.

Der übliche herkömmliche Ansatz ist, die Maschinen mit sicherer Sensorik auszustatten, die gefährliche Situationen erkennt und veranlasst, dass die Maschine rechtzeitig durch Ausweichen, Verlangsamen oder Nothalt in einen sicheren Zustand verbracht wird. Dafür eignen sich insbesondere optische Sensoren, wie Laserscanner oder Kameras, einschließlich 3D-Kameras.

Derartige im Personenschutz beziehungsweise in der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile.

Ein modernes Distributionszentrum setzt beispielsweise kleine fahrerlose Transporteinheiten (AGC, automated guided vehicle) ein, die Regale mit Waren zwischen Regalabstellplatz und Packern transportieren. Die Packer greifen die Waren aus den zu ihnen gebrachten Regalen und verpacken sie in einem Karton.

Eine Möglichkeit, die Packer abzusichern, besteht nun darin, sämtliche AGCs mit sicherer Sensorik auszustatten. Die Packer werden dadurch vor Unfällen geschützt, wo immer sie sich befinden. Das hat aber zwei gravierende Nachteile. Zum einen sind die notwendige sichere Sensorik an allen AGCs und die darauf aufsetzende Sicherheitslösung zur Unfallvermeidung ausgesprochen aufwändig. Außerdem wird durch jede Absicherungsmaßnahme der Ablauf empfindlich gestört und verzögert.

Daher gibt es Distributionszentren, in denen die Fahrtwege um die Regalabstellplätze und zu den Packern den AGCs exklusiv vorbehalten bleiben. Die Packer sind in einer Art Käfig geschützt und so physisch von den AGCs getrennt. Damit entfällt das Erfordernis, die AGCs nach den strengen Maßstäben der einschlägigen Sicherheitsnormen abzusichern.

Es lässt sich aber im Alltag nicht vermeiden, dass Personen den Schutzkäfig verlassen und den eigentlich den AGCs vorbehaltenen Bereich betreten müssen. Häufigste Ursache dafür ist eine Ware, die beim Transport durch die AGCs oder während der Entnahme durch den Packer auf den Boden fällt. Diese Ware kann von einem Menschen nur herausgeholt werden, wenn sichergestellt ist, dass kein AGC in der unmittelbaren Umgebung fährt. Da die AGCs nicht über sichere Sensorik verfügen, ist es in der Regel erforderlich, die AGCs in einer weiten Umgebung anzuhalten. Das wiederum führt zu teuren Stillständen.

Die US 9 682 483 B1 befasst sich in diesem Zusammenhang mit einem System zum Entfernen von Fremdkörpern auf einem Lagerboden. Dabei wird ein Reinigungsfahrzeug mit einem Roboterarm ausgerüstet, der in der Lage ist, Objekte vom Boden aufzuheben. Nachteilig hieran ist neben den Kosten für den Roboterarm, dass zumindest vorerst der Mensch einem Roboterarm noch weit überlegen in seinen flexiblen Fähigkeiten ist, die verschiedensten denkbaren Situationen nach Herabfallen eines Objekts aufzulösen.

Die US 2018/0053141 A1 offenbart ein AGV-Managementsystem mit einer Vielzahl von AGVs, die Waren zwischen Lagerplätzen transportieren. Es sind Übergänge vorgesehen, an denen Personen die Fahrwege kreuzen. Diese sind mit Sendern ausgestattet, auf deren Signal hin die AGVs ihre Fahrtgeschwindigkeit reduzieren. Die Übergänge können auch ad hoc durch einen Browser und ein Menü oder durch Mitführen der Sender an einem Kleidungsstück der Person erzeugt werden.

Aus der US 9 744 665 B1 ist eine Optimierung von Positionen für Beobachterroboter bekannt. Die Roboter vermessen eine Baustelle und sind in der Lage, ihre eigene Position anzupassen, wenn ihnen beispielsweise die Sichtlinie versperrt wird.

Es ist daher Aufgabe der Erfindung, ein Transportsystem anzugeben, das mit möglichst einfachen Maßnahmen eine Reaktion auf unvorhergesehene Ereignisse zulässt.

Diese Aufgabe wird durch ein Transportsystem für Waren und ein Verfahren zum Entfernen einer herabgefallenen Ware oder eines sonstigen Objekts nach Anspruch 1 beziehungsweise 14 gelöst. Eine Vielzahl von fahrerlosen Transporteinheiten, insbesondere AGCs, bewegt sich zum Aufnehmen, Transportieren und Bereitstellen beziehungsweise Ablegen der Waren in einem Fahrtbereich, der für Personen im Regelbetrieb gesperrt beziehungsweise nicht zugänglich ist. Durch die exklusive Zuweisung des Fahrtbereichs für die fahrerlosen Transporteinheiten ist es nicht erforderlich, Maßnahmen zur Vermeidung von Unfällen mit Personen zu ergreifen. Die fahrerlosen Transporteinheiten besitzen daher keine sichere Sensorik im Sinne der einleitend genannten oder vergleichbarer Normen. Einfachere Sensorik sowie Steuerungsmaßnahmen zur Vermeidung von Kollisionen der fahrerlosen Transporteinheiten werden vorzugsweise dennoch ergriffen, aber das betrifft nur Sachschäden, und daher erreichen diese Maßnahmen nicht das hohe und aufwändige Niveau, das für den Personenschutz verlangt wird.

Die Erfindung geht von dem Grundgedanken aus, mindestens eine fahrerlose Transporteinheit zu einem sicheren Begleitfahrzeug aufzurüsten. Das Begleitfahrzeug wird dazu mit mindestens einem Sensor zur sicheren Erfassung von Sensordaten überwacht. Dieser sichere Sensor ist vorzugsweise am Begleitfahrzeug angebracht. Es ist aber auch denkbar, das Umfeld des Transportsystems, also beispielsweise die Lagerhalle, zumindest teilweise mit sicheren Sensoren zu überwachen, welche den sicheren Sensor am Begleitfahrzeug ersetzen oder ergänzen. Die Anforderungen an die Erfassung der Sensordaten mit dem sicheren Sensor entsprechen den strengen Sicherheitsnormen. Im Gegensatz zu den übrigen fahrerlosen Transporteinheiten wird also für das Begleitfahrzeug allein oder in Kombination mit der übergeordneten Steuerung und damit verbundenen sicheren Sensoren das hohe Sicherheitsniveau des Unfallschutzes für Personen gefordert.

Das Begleitfahrzeug begleitet eine Person sicher in dem ansonsten nicht zugänglichen Fahrtbereich. Solange das Begleitfahrzeug dabei ist und die Sicherheit gewährleistet, darf deshalb ausnahmeweise eine Person den Fahrtbereich betreten, um dort händisch eine Maßnahme zu ergreifen, zu der die fahrerlosen Transporteinheiten selbst nicht in der Lage wären. Dabei handelt es sich insbesondere um das Bereinigen einer Situation, welche den Betrieb der fahrerlosen Transporteinheiten in dem Fahrtbereich behindert. Das Begleitfahrzeug bleibt vorzugsweise in der Nähe der Person. Dabei hängt die erforderliche Nähe davon ab, in welchem Umkreis das Begleitfahrzeug Sicherheit für die Person schaffen kann, was wiederum unter anderem durch die Leistungsfähigkeit des Sensors bestimmt ist.

Die Erfindung hat den Vorteil, dass ein besonders reibungsloser Ablauf in dem Fahrtbereich und damit eine hohe Effizienz des Transports gewährleistet ist. Das Bereinigen einer Störung im Fahrtbereich kann rasch und einfach durch eine Person erfolgen. Deren Sicherheit ist sehr kostengünstig gewährleistet, da nur das Begleitfahrzeug und nicht etwa sämtliche fahrerlosen Transporteinheiten den hohen Sicherheitsstandards unterworfen sind. Eine Abschaltung der fahrerlosen Transporteinheiten während des Aufenthalts der Person im Fahrtbereich ist nicht erforderlich, der Warentransport kann weitgehend ungestört fortgesetzt werden. Das Begleitfahrzeug beziehungsweise eine übergeordnete Steuerung sperrt nur die tatsächlich benötigte unmittelbare Umgebung der Person für die übrigen fahrerlosen Transporteinheiten, die direkt weiterfahren können, sobald sich die Person und das Begleitfahrzeug entsprechend weiterbewegt haben.

An den Fahrtbereich grenzt vorzugsweise mindestens ein Arbeitsbereich an, in dem sich eine Person aufhält, um eine Ware von einer fahrerlosen Transporteinheit zu übernehmen oder der fahrerlosen Transporteinheit eine Ware zu übergeben. Der Arbeitsbereich ist klar von dem Fahrtbereich getrennt und kann daher relativ einfach geschützt werden, beispielsweise durch Absperrgitter oder ähnliche mechanische Sicherungen. Ungesicherte fahrerlose Transporteinheiten kommen daher nicht in Kontakt mit Personen, sie halten zwangsläufig einen gewissen Abstand. Die Absperrung ist aber natürlich für die Warenübergabe durchlässig.

Das Begleitfahrzeug ist bevorzugt dafür ausgebildet, eine Person zu einer bestimmten Position in dem Fahrtbereich zu begleiten. Das Begleitfahrzeug ermöglicht der Person damit, eine Position zu erreichen, an der eine händische Maßnahme erforderlich ist. Vorzugsweise wird die Person von dem Begleitfahrzeug während des gesamten Aufenthalts in dem Fahrtbereich begleitet, also auch auf dem Weg zu möglichen weiteren bestimmten Positionen und auf dem Rückweg.

An der bestimmten Position ist bevorzugt eine herabgefallene Ware oder ein sonstiges zu entfernendes Objekt erreichbar. Eine herabgefallene Ware ist eine relativ häufig auftretende Situation, in der ein händisches Eingreifen in den automatischen Betrieb im Fahrtbereich erforderlich ist. Die herabgefallene Ware droht nicht nur zerstört zu werden, sie kann vor allem den Betrieb der fahrerlosen Transporteinheiten stören. Die Person wird sicher zu der herabgefallenen Ware begleitet, hebt sie auf und bringt sie in den Arbeitsbereich oder übergibt sie an das Begleitfahrzeug oder ein anderes fahrerloses Transportfahrzeug. Andere Objekte, die auf diese Weise entfernt werden können, sind auch denkbar, insbesondere ein defektes Transportfahrzeug.

Die bestimmte Position ist bevorzugt von dem Begleitfahrzeug oder einer übergeordneten Steuerung des Transportsystems festgelegt. In diesem Fall fährt gleichsam das Begleitfahrzeug voraus, wobei es physisch ebenso neben oder hinter der Person bleiben kann, kennt jedenfalls das Ziel und gibt den Weg für die Person vor. Beispielsweise hat eines der fahrerlosen Transportfahrzeuge, insbesondere das erfindungsgemäß vorzugsweise mit besserer Sensorik ausgestattete Begleitfahrzeug, oder eine den Fahrtbereich beobachtende Kamera eine herabgefallene Ware oder ein sonstiges störendes Objekt bemerkt. Die übergeordnete Steuerung fordert nun eine Person auf, die Ware aufzuheben, und schickt ihr das Begleitfahrzeug.

Vorzugsweise ist die bestimmte Position von der Person festgelegt. Die Initiative, den Fahrtbereich zu betreten, kann dabei wahlweise von dem Transportsystem oder der Person selbst ergriffen werden. Die Person gibt die bestimmte Position beispielsweise über eine Tastatur oder auf einer Karte des Fahrtbereichs an, oder sie betritt nach entsprechender Freigabe des Transportsystems den Fahrtbereich und läuft zu der bestimmten Position, während das Begleitfahrzeug mitkommt und den Weg absichert. Auch in diesem Fall folgt die Person vorzugsweise dem Begleitfahrzeug, sofern diesem das Ziel bekannt ist.

Das Begleitfahrzeug ist bevorzugt dafür ausgebildet, die Person an einem an den Fahrtbereich angrenzenden Arbeitsbereich oder an einem Zugangsbereich zu dem Fahrtbereich abzuholen. Das Begleitfahrzeug kommt auf Anforderung der Person oder wird von dem Transportsystem dorthin geschickt. Es ist denkbar, dass das Begleitfahrzeug zum Abholen und Zurückbringen der Person ausnahmsweise auch zumindest teilweise in den ansonsten für die Transporteinheiten gesperrten Arbeitsbereich hineinfährt. Alternativ zum Abholen aus dem Arbeitsbereich, der ein temporäres Öffnen der dortigen mechanischen Sicherung erfordert, ist ein gesonderter Zugangsbereich zu dem Arbeitsbereich denkbar, zu dem sich die Person außerhalb des Fahrtbereichs bewegt, um sich von dem Begleitfahrzeug abholen zu lassen.

Das Begleitfahrzeug weist bevorzugt eine Transporteinrichtung auf, um die Person in dem nicht zugänglichen Fahrtbereich zu transportieren. Die Person bewegt sich also innerhalb des Fahrtbereichs nicht eigenständig, sondern wird von dem Begleitfahrzeug transportiert. Das ermöglicht unter anderem einen gewissen mechanischen Schutz der Person innerhalb des Begleitfahrzeugs, stellt unmittelbar sicher, dass die Person sich nicht in gefährlicher Weise von dem Begleitfahrzeug entfernt, und verkürzt den Aufenthalt insbesondere im Falle längerer Wege.

Der Sensor ist bevorzugt dafür ausgebildet, das Begleitfahrzeug in dem Fahrtbereich zu lokalisieren. Diese Information wird vorzugsweise an eine Leitstelle oder übergeordnete Steuerung weitergegeben. Das Transportsystem hat also im Sinne von Sicherheitsnormen verlässliche Kenntnis des jeweiligen Aufenthaltsortes des Begleitfahrzeugs. Damit können sehr zielgerichtet die fahrerlosen Transporteinheiten die erforderliche Umgebung um das Begleitfahrzeug vorübergehend meiden, dort langsam fahren oder anhalten, um die begleitete Person nicht zu gefährden und dennoch außerhalb dieser unmittelbaren Umgebung den Normalbetrieb aufrechterhalten.

Der Sensor ist bevorzugt dafür ausgebildet, die begleitete Person sicher zu erfassen. Dazu eignen sich berührungslose Sensoren wie optische Sensoren, aber auch ein Schalter oder Berührungssensor, über den die Person ständigen physischen Kontakt zu dem Begleitfahrzeug halten muss. Dadurch kann zielgerichtet gerade die Umgebung der Person vor den fahrerlosen Transporteinheiten geschützt werden, während ansonsten ein noch recht großzügig bemessener Umkreis des Begleitfahrzeugs berücksichtigt werden müsste.

Der Sensor ist bevorzugt dafür ausgebildet, einen Höchstabstand der begleiteten Person zu dem Begleitfahrzeug zu überwachen. Damit kann das Begleitfahrzeug deren Sicherheit am besten gewährleisten. Der noch zugelassene Abstand der Person von dem Begleitfahrzeug hängt von dem Absicherungskonzept ab.

Vorzugsweise sichern mehrere fahrerlose Transporteinheiten gemeinsam den Weg der Person in dem Fahrtbereich ab. Das Begleitfahrzeug und/oder eine übergeordnete Steuerung des Transportsystems koordiniert diese fahrerlosen Transporteinheiten. Es ist denkbar, aber nicht erforderlich, dass die für die gemeinsame Absicherung rekrutierten fahrerlosen Transporteinheiten wie das Begleitfahrzeug mit sicherer Sensorik ausgestattet sind.

Die mehreren fahrerlosen Transporteinheiten bilden bevorzugt eine Gasse. In der Gasse bewegt sich die Person geschützt vor weiteren fahrerlosen Transporteinheiten, die eine Kollision mit den die Gasse bildenden fahrerlosen Transporteinheiten ohnehin im üblichen Ablauf meiden und notfalls physisch davon aufgehalten würden. Die Gasse kann den gesamten Weg der Person durch den Fahrtbereich abdecken, etwa von einem Arbeits- oder Zugangsbereich bis zu einer herabgefallenen Ware, oder nur jeweils einen Teilabschnitt des Weges in einer aktuellen Umgebung der Person. Ein solcher Teilabschnitt bewegt sich dann vorzugsweise mit der Person mit.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung eines Transportsystems mit mehreren fahrerlosen Transporteinheiten, deren exklusivem Fahrtbereich und angrenzenden Arbeitsbereichen für Personen sowie einem herabgefallenen Paket, das von einer Person aus dem Fahrtbereich herausgeholt werden soll;
- Fig. 2: eine Übersichtsdarstellung ähnlich Figur 1 mit einem Begleitfahrzeug, das die Person sicher zu dem herabgefallenen Paket begleitet;
- Fig. 3: eine Übersichtsdarstellung ähnlich Figur 1 mit einem Begleitfahrzeug, das die Person zu dem herabgefallenen Paket transportiert; und
- Fig. 4: eine Übersichtsdarstellung ähnlich Figur 1, bei dem mehrere fahrerlose Transporteinheiten eine sichere Gasse bilden, in der eine Person zu dem herabgefallenen Paket gelangt.

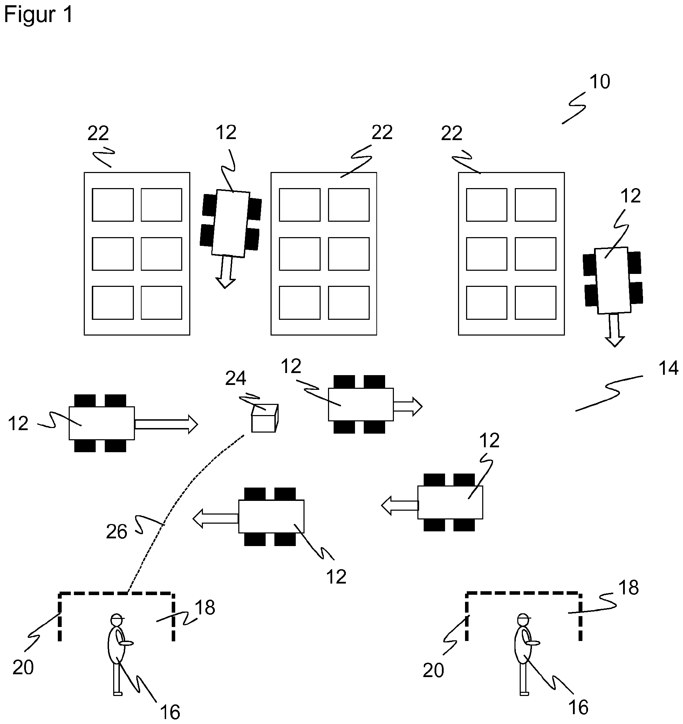

Figur 1 zeigt ein Transportsystem 10 in einer Übersichtsdarstellung. Das Transportsystem 10 findet Anwendung in der Logistik- oder Fabrikautomation und befördert Objekte, die hier als Waren bezeichnet werden. Beispiele für den Einsatz sind Lager, Distributionszentren, Postverteilungszentren oder die Gepäckabfertigung in Flughäfen.

Den Transport der Waren übernehmen mehrere fahrerlose Transporteinheiten 12, Transportfahrzeuge oder Roboter (z.B. AGC, automated guided container, oder AGV, automated guided vehicle). Die fahrerlosen Transporteinheiten 12 stehen miteinander und/oder mit einer nicht gezeigten übergeordneten Steuerung oder Leitstelle in Verbindung, um die Abläufe zu koordinieren. Die Leitstelle kann auch die Steuerung der fahrerlosen Transporteinheiten 12 übernehmen. Gerade für lokale Entscheidungen, wie das Beschleunigen, Bremsen, Ausweichen, das Aufnehmen, Übergeben und Ablegen von Waren, das Auffinden des geeigneten Weges und dergleichen können die fahrerlosen Transporteinheiten 12 aber auch zumindest teilweise autonom arbeiten.

Der Fahrtbereich 14, in dem sich die fahrerlosen Transporteinheiten 12 bewegen, ist vorzugsweise exklusiv für die fahrerlosen Transporteinheiten 12 und weitere Maschinen vorgesehen. Personen sind dort im Regelbetrieb nicht zugelassen. Vielmehr sind Personen 16 in separaten, an den Fahrtbereich 14 angrenzenden Arbeitsbereichen 18 untergebracht, die vorzugsweise durch mechanische Absicherungen 20 von dem Fahrtbereich 14 getrennt sind. Die fahrerlosen Transporteinheiten 12 bringen Waren aus Regalen 22 im Fahrtbereich 14 zu den Personen 16 an deren Arbeitsbereichen 18. Alternativ befördern die Transporteinheiten 12 ganze Regale oder Regalteile mit mehreren zur Auswahl stehenden Waren von Regalabstellplätzen zu den Arbeitsbereichen 18. Die Personen 16 greifen über oder durch die mechanische Absicherung 20, um Waren von den fahrerlosen Transporteinheiten 12 entgegenzunehmen oder sie den fahrerlosen Transporteinheiten 12 zu übergeben.

Aufgrund der klaren räumlichen Trennung von Fahrtbereich 14 und Arbeitsbereich 18 sowie der mechanischen Absicherung 20 ist es nicht erforderlich, dass die fahrerlosen Transporteinheiten 12 im Sinne einschlägiger Normen des Personenschutzes sicher sind. Sie weisen dennoch typischerweise Sensoren auf, um einander und sonstigen Hindernissen rechtzeitig auszuweichen oder abzubremsen. Die Fehlertoleranz ist aber bedeutend höher, weil nur Sachschäden und Stillstandzeiten und nicht etwa Verletzungen von Menschen drohen.

Es kommt aber immer wieder zu Situationen, in denen ein händischer Eingriff in dem Fahrtbereich durch Personen 16 doch wünschenswert wäre. Das betrifft liegengebliebene fahrerlose Transporteinheiten 12 oder deren Wartung, Arbeiten an den Regalen 22 und besonders oft herabgefallene Waren 24, die im Weiteren als Beispiel herangezogen werden. Soll eine Person 16 die Ware 24 aufnehmen und aus dem Fahrtbereich 14 herausholen oder einer fahrerlosen Transporteinheit 12 übergeben, so muss der Weg 26 durch den Fahrtbereich 14 zu der Ware 24 abgesichert werden. Da aber die fahrerlosen Transporteinheiten 12 über keine sichere Sensorik verfügen, gibt es dafür ohne zusätzliche Maßnahmen nur die Möglichkeit, die fahrerlosen Transporteinheiten 12 in einer weiträumigen Umgebung oder gar im ganzen Fahrtbereich 14 stillzusetzen oder so langsam fahren zu lassen, dass ein Unfall keine ernsthaften Schäden verursachen würde.

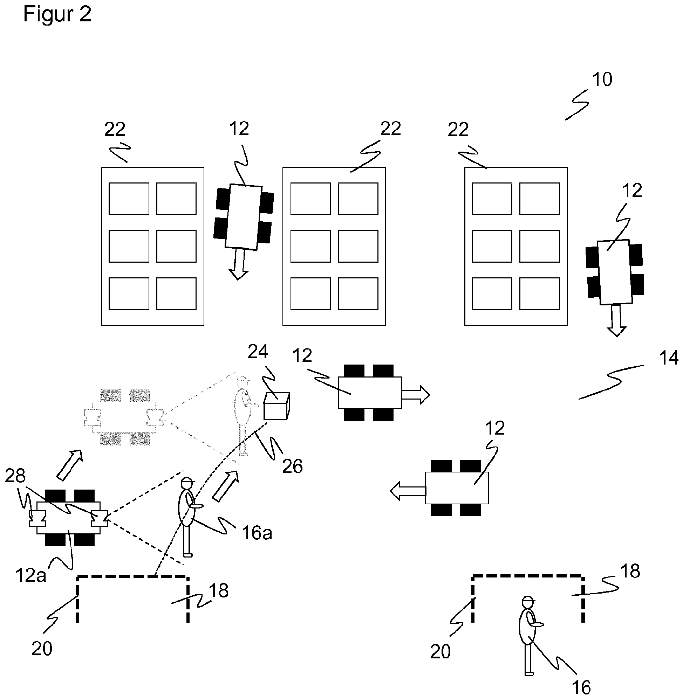

Figur 2 zeigt eine weitere Übersichtsdarstellung eines Transportsystems 10. Um es einer Person 16a zu ermöglichen, den Weg 26 ohne Gefahr zu beschreiten und die herabgefallene Ware 24 aufzuheben, wird eine als Begleitfahrzeug 12a ausgerüstete fahrerlose Transporteinheit eingesetzt.

Das Begleitfahrzeug 12a weist dazu mindestens einen Sensor 28 auf, der sichere Sensordaten erzeugt. Sicher bedeutet, dass ein definiertes Sicherheitsniveau im Sinne der einleitend genannten oder vergleichbarer Normen erreicht wird. Dazu kann der Sensor 28 selbst ein sicherer Sensor sein, beispielsweise durch Selbsttests, redundante Bauteile und Messverfahren und dergleichen an sich bekannte Maßnahmen, oder alternativ wird ein Verbund von Sensoren 28 eingesetzt, der durch gegenseitige Überprüfungen, Tests oder Plausibilisierung sichere Sensordaten bereitstellt.

Geeignete Sensoren 28 sind beispielsweise optoelektronische Sensoren wie Laserscanner oder Kameras einschließlich 3D-Kameras. Es sind aber auch andere Sensoren als diversitäre Ergänzung oder als Alternative vorstellbar, wie Ultraschallsensoren, induktive, magnetische oder kapazitive Sensoren oder Radar. Eine weitere Alternative ist ein Kontaktsensor oder Schalter, mit dem die Person 16a physischen Kontakt halten muss, um sicherzustellen, dass sie sich unmittelbar bei dem Begleitfahrzeug 12a befindet. Die Sensorik zur Absicherung muss aber nicht oder zumindest nicht allein von dem Begleitfahrzeug 12a zur Verfügung gestellt werden. Es ist auch vorstellbar, die Umgebung des Transportsystems 10, d.h. insbesondere die Fahrwege, mit mindestens einem sicheren Sensor zu überwachen, der nicht am Begleitfahrzeug 12a angebracht und insbesondere fix montiert ist. Sichere Sensoren können also nur am Begleitfahrzeug 12a, nur in der Infrastruktur beziehungsweise als Teil des Transportsystems 10 oder in einer Kombination aus beidem vorgesehen sein. Im Folgenden wird stellvertretend die Ausführungsform beschrieben, die sich allein auf sichere Sensoren 28 des Begleitfahrzeugs 12a stützt.

Zu den möglichen Aufgaben der Sensoren 28 zählen die sichere Lokalisierung des Begleitfahrzeugs 12a selbst sowie die sichere Erfassung der Person 16a in einer Umgebung des Begleitfahrzeugs 12a. Dadurch weiß das Begleitfahrzeug 12a beziehungsweise die mit dem Begleitfahrzeug 12a in Verbindung stehende übergeordnete Steuerung genau, in welchem zu schützenden Bereich die fahrerlosen Transporteinheiten 12 Rücksicht auf die Person 16a nehmen müssen. In dem zu schützenden Bereich dürfen fahrerlose Transporteinheiten 12 sich nicht oder nur sehr langsam bewegen. Überall sonst kann der Betrieb trotz Anwesenheit der Person 16 in dem Fahrtbereich 14 ungestört fortgesetzt werden.

Das Begleitfahrzeug 12a fährt auf Anforderung der Person 16a oder auf Veranlassung der übergeordneten Steuerung des Transportsystems 10 zu einem Ort am Rand des Fahrtbereichs 14. In Figur 2 ist das eine Position nahe dem Arbeitsbereich 18, alternativ könnte es auch bestimmte sichere Zugangsbereiche in den Fahrtbereich 14 geben. Die Person 16a wird ab dem sicheren Übergang aus dem Arbeitsbereich 18 in den Fahrtbereich 14 von den Sensoren 28 des Begleitfahrzeugs 12a sicher erfasst. Figur 2 zeigt eine Position von Person 16a und Begleitfahrzeug 12a direkt nach dem Betreten des Fahrtbereichs 14 sowie schattiert zu einem späteren Zeitpunkt, nachdem sich Person 16a und Begleitfahrzeug 12a in die Nähe der herabgefallenen Ware 24 bewegt haben.

Das Begleitfahrzeug 12a begleitet die Person 16a auf dem Weg 26 zu der herabgefallenen Ware 24 und zurück. Dadurch weiß die übergeordnete Steuerung des Transportsystems 10 über den gesamten Aufenthalt der Person 16a im Fahrtbereich 14 hinweg, wo sich aktuell die fahrerlosen Transporteinheiten 12 nicht oder nur langsam beziehungsweise nur in einer Richtung von der Person 16a weg bewegen dürfen. Es ist auch denkbar, dass die Sensoren 28 Objekte in der Umgebung der Person 16a erkennen, insbesondere fahrerlose Transporteinheiten 12, die sich aufgrund einer Fehlsteuerung doch auf die Person 16a zubewegen oder ihr zu nahe kommen und für die dann sofort eine sicherheitsgerichtete Reaktion veranlasst wird, beispielsweise ein Notaus über die übergeordnete Steuerung für das gesamte Transportsystem 10 oder zumindest den Bereich in einer Umgebung des Begleitfahrzeugs 12a und/oder der Person 16a. Damit ist die Person 16a geschützt und kann die herabgefallene Ware 24 aus dem Fahrtbereich 14 herausholen oder gegebenenfalls auch auf dem Begleitfahrzeug 12a oder einer anderen fahrerlosen Transporteinheit 12 ablegen.

Das Begleitfahrzeug 12a kann im Prinzip baugleich mit den übrigen fahrerlosen Transporteinheiten 12 sein, mit dem Unterschied, dass es mit Hilfe der Sensoren 28 ein sicherer Begleiter der Person 16a wird. Allerdings ist keineswegs zwingend erforderlich, dass die fahrerlosen Transporteinheiten 12 untereinander baugleich sind, und dementsprechend kann auch das Begleitfahrzeug 12a anders aufgebaut sein. Wenn das Begleitfahrzeug 12a nicht als Begleiter gebraucht wird, kann es mit den anderen fahrerlosen Transporteinheiten 12 Waren transportieren oder gesondert warten, bis es gebraucht wird.

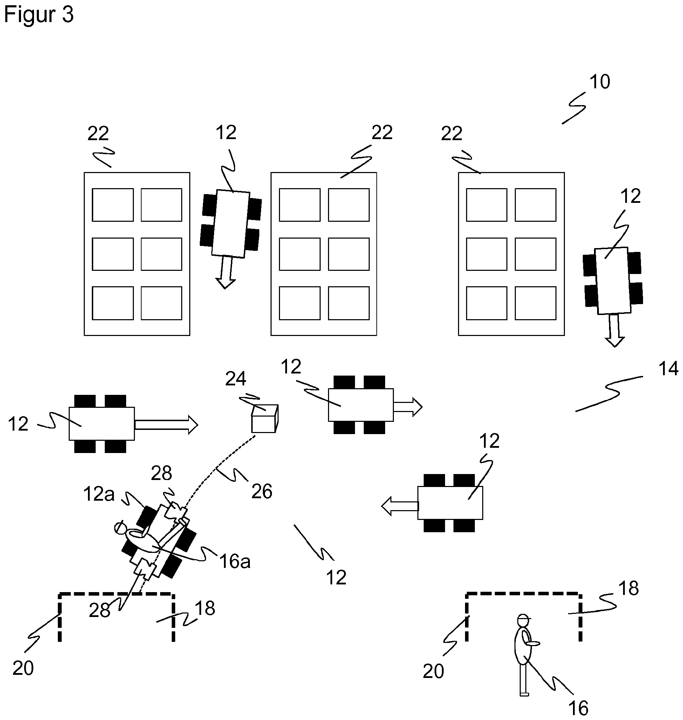

Figur 3 zeigt eine weitere Übersichtsdarstellung eines Transportsystems 10. In dieser Ausführungsform ist das Begleitfahrzeug 12a zusätzlich mit einer nicht gezeigten Transporteinrichtung für Personen ausgestattet. Damit fährt das Begleitfahrzeug 12a die Person 16a sicher zu der herabgefallenen Ware 24 und zurück. Die Person 16a steigt dort ab, um die herabgefallene Ware 24 aufzunehmen, und wird währenddessen von dem Begleitfahrzeug 12a abgesichert. Alternativ wird es in vielen Fällen möglich sein, dass die Person 16a die herabgefallene Ware 24 von dem Begleitfahrzeug 12a aus aufnimmt.

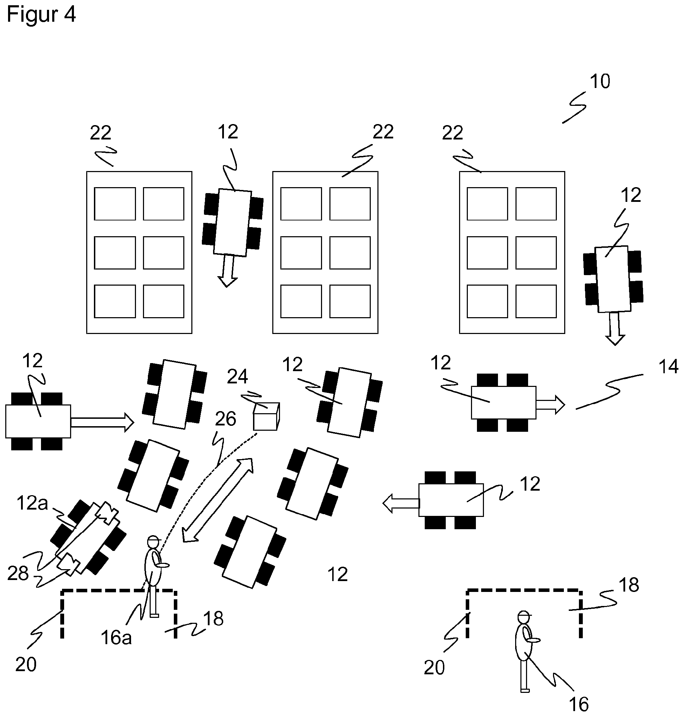

Figur 4 zeigt eine weitere Übersichtsdarstellung eines Transportsystems 10. Das ist ein Beispiel für die Möglichkeit, dass eine oder mehrere fahrerlose Transporteinheiten 12 zusammenwirken, um den Weg 26 der Person 16a zu der herabgefallenen Ware 24 abzusichern. Dafür bilden hier fahrerlose Transporteinheiten 12 eine Gasse. Das Begleitfahrzeug 12a beteiligt sich an der Bildung der Gasse oder fährt gemeinsam mit der Person 16a durch die Gasse. Jedenfalls erfüllt es vorzugsweise die Aufgabe, mit Hilfe seiner Sensoren 28 sicherzustellen, dass sich die Person 16a tatsächlich in der Gasse befindet. Es ist denkbar, mehrere fahrerlose Transporteinheiten 12 und nicht nur ein einziges Begleitfahrzeug 12a mit Sensoren 28 auszurüsten, um die Person 16a in der Gasse zu erfassen. Die übergeordnete Steuerung sorgt dafür, dass in einer Umgebung der Person 16a oder sogar der Gasse keine weiteren fahrerlosen Transporteinheiten 12 fahren. Figur 4 zeigt eine Gasse, die den vollständigen Weg 26 zu der herabgefallenen Ware 24 umschließt. Es ist auch denkbar, eine Gasse nur jeweils für den Teilabschnitt des Weges 26 zu bilden, in dem sich aktuell die Person 16a befindet. Vorzugsweise bewegen sich dann die fahrerlosen Transporteinheiten 12, die das Gassenstück bilden, flankierend mit der Person 16a mit.

Als weitere nicht dargestellte Alternative kann eine fahrerlose Transporteinheit mit einem Roboterarm ausgestattet werden, mit dem die herabgefallene Ware 24 aufgenommen wird. Dann muss keine Person 16 den Fahrtbereich 14 betreten.

## Patentansprüche

1. Transportsystem (10) für Waren mit einer Vielzahl fahrerloser Transporteinheiten (12), die sich in einem für Personen (16) nicht zugänglichen Fahrtbereich (14) bewegen und die keine Sensorik zur verlässlichen Unfallvermeidung mit Personen (16) aufweisen,
**dadurch gekennzeichnet,**
**dass** mindestens eine fahrerlose Transporteinheit als Begleitfahrzeug (12a) ausgebildet ist, um eine Person (16a) sicher in dem nicht zugänglichen Fahrtbereich (14) zu begleiten und so Sicherheit zu gewährleisten, so dass die Person (16a) ausnahmsweise den nicht zugänglichen Fahrtbereich (14) betreten darf, wobei das Begleitfahrzeug insbesondere mindestens einen Sensor (28) zur sicheren Erfassung von Sensordaten aufweist.

2. Transportsystem (10) nach Anspruch 1,
wobei an den Fahrtbereich (14) mindestens ein Arbeitsbereich (18) angrenzt, in dem sich eine Person (16) aufhält, um eine Ware von einer fahrerlosen Transporteinheit (12) zu übernehmen oder der fahrerlosen Transporteinheit (12) eine Ware zu übergeben.

3. Transportsystem (10) nach Anspruch 1 oder 2,
wobei das Begleitfahrzeug (12a) dafür ausgebildet ist, eine Person (16a) zu einer bestimmten Position in dem Fahrtbereich (14) zu begleiten.

4. Transportsystem (10) nach Anspruch 3,
wobei an der bestimmten Position eine herabgefallene Ware (24) oder ein sonstiges zu entfernendes Objekt erreichbar ist.

5. Transportsystem (10) nach Anspruch 3 oder 4,
wobei die bestimmte Position von dem Begleitfahrzeug (12a) oder einer übergeordneten Steuerung des Transportsystems (10) festgelegt ist.

6. Transportsystem (10) nach einem der Ansprüche 3 bis 5,
wobei die bestimmte Position von der Person (16a) festgelegt ist.

7. Transportsystem (10) nach einem der vorhergehenden Ansprüche,
wobei das Begleitfahrzeug (12a) dafür ausgebildet ist, die Person (16a) an einem an den Fahrtbereich (14) angrenzenden Arbeitsbereich (18) oder an einem Zugangsbereich zu dem Fahrtbereich (14) abzuholen.

8. Transportsystem (10) nach einem der vorhergehenden Ansprüche,
wobei das Begleitfahrzeug (12a) eine Transporteinrichtung aufweist, um die Person (16a) in dem nicht zugänglichen Fahrtbereich (14) zu transportieren.

9. Transportsystem (10) nach einem der vorhergehenden Ansprüche,
wobei der Sensor (28) dafür ausgebildet ist, das Begleitfahrzeug (12a) in dem Fahrtbereich (14) zu lokalisieren.

10. Transportsystem (10) nach einem der vorhergehenden Ansprüche,
wobei der Sensor (28) dafür ausgebildet ist, die begleitete Person (16a) sicher zu erfassen.

11. Transportsystem (10) nach einem der vorhergehenden Ansprüche,
wobei der Sensor (28) dafür ausgebildet ist, einen Höchstabstand der begleiteten Person (16a) zu dem Begleitfahrzeug (12a) zu überwachen.

12. Transportsystem (10) nach einem der vorhergehenden Ansprüche,
wobei mehrere fahrerlose Transporteinheiten (12) gemeinsam den Weg der Person (16a) in dem Fahrtbereich (14) absichern.

13. Transportsystem (10) nach Anspruch 12,
wobei die mehreren fahrerlosen Transporteinheiten (12, 12a) eine Gasse bilden.

14. Verfahren zum Entfernen einer herabgefallenen Ware (24) oder eines sonstigen Objekts aus einem für Personen (16) nicht zugänglichen Fahrtbereich (14), in dem sich eine Vielzahl fahrerloser Transporteinheiten (12) bewegen, die keine Sensorik zur verlässlichen Unfallvermeidung mit Personen (16) aufweisen, **dadurch gekennzeichnet,**
**dass** mindestens eine fahrerlose Transporteinheit (12) eine Person (16a) in dem nicht zugänglichen Fahrtbereich (14) als Begleitfahrzeug (12a) sicher begleitet, wobei zur Absicherung der Person (16a) die Position und/oder Umgebung des Begleitfahrzeugs (12a) und/oder der Person (16a) mit mindestens einem Sensor (28) sicher überwacht und so Sicherheit gewährleistet wird, so dass die Person (16a) ausnahmsweise den nicht zugänglichen Fahrtbereich (14) betreten darf, insbesondere unter Einbeziehung mindestens eines sicheren Sensors (28) des Begleitfahrzeugs (12a).

## Claims

1. A transport system (10) for goods, the transport system (10) having a plurality of driverless transport units (12) that move in an inaccessible travel area (14) not accessible to persons (16) and that have no sensor system for reliable accident prevention with persons (16),
**characterized in that** at least one driverless transport unit is configured as an escort vehicle (12a) for safely accompanying a person (16a) in the inaccessible travel area (14) and thus ensuring safety, so that the person (16a) may exceptionally enter the inaccessible travel area (14), wherein the escort vehicle has in particular at least one sensor (28) for the safe detection of sensor data.

2. The transport system (10) according to claim 1,
wherein at least one working area (18) is adjacent to the travel area (14), in which a person (16) is present in order to take over a product from a driverless transport unit (12) or to hand over a product to the driverless transport unit (12).

3. The transport system (10) according to claim 1 or 2,
wherein the escort vehicle (12a) is configured to accompany a person (16a) to a specific position in the travel area (14).

4. The transport system (10) according to claim 3,
wherein a dropped good (24) or another object to be removed is accessible at the specific position.

5. The transport system (10) according to claim 3 or 4,
wherein the specific position is determined by the escort vehicle (12a) or by a higher-level control of the transport system (10).

6. The transport system (10) according to any of claims 3 to 5,
where the specific position is determined by the person (16a).

7. The transport system (10) according to any of the preceding claims,
wherein the escort vehicle (12a) is configured to pick up the person (16a) at a working area (18) adjacent to the travel area (14) or at an access area for the travel area (14).

8. The transport system (10) according to any of the preceding claims,
wherein the escort vehicle (12a) comprises a transport device for transporting the person (16a) in the inaccessible travel area (14).

9. The transport system (10) according to any of the preceding claims,
wherein the sensor (28) is configured to locate the escort vehicle (12a) in the travel area (14).

10. The transport system (10) according to any of the preceding claims,
wherein the sensor (28) is adapted to safely detect the accompanied person (16a) .

11. The transport system (10) according to any of the preceding claims,
wherein the sensor (28) is configured to monitor a maximum distance of the accompanied person (16a) from the escort vehicle (12a).

12. The transport system (10) according to any of the preceding claims,
wherein several driverless transport units (12) together secure the path of the person (16a) in the travel area (14).

13. The transport system (10) according to claim 12,
wherein the plurality of driverless transport units (12, 12a) form an aisle.

14. A method for removing a dropped good (24) or other object from an inaccessible travel area (14) not accessible to persons (16), a plurality of driverless transport units (12) moving in the inaccessible travel area (14) that have no sensor system for reliable accident prevention with persons (16), **characterized in that** at least one driverless transport unit (12) safely accompanies a person (16a) in the inaccessible travel area (14) as an escort vehicle (12a), the position and/or surroundings of the escort vehicle (12a) and/or of the person (16a) being safely monitored by at least one sensor (28) in order to protect the person (16a) and thus safety being ensured, so that the person (16a) may exceptionally enter the inaccessible travel area (14), in particular using at least one safe sensor (28) of the escort vehicle (12a).

## Revendications

1. Système de transport (10) pour marchandises, comportant une pluralité d'unités de transport (12) sans conducteur qui se déplacent dans une zone de déplacement (14) non accessible aux personnes (16) et qui sont dépourvues de système de capteurs destiné à prévenir de manière fiable les accidents avec des personnes (16),
**caractérisé en ce que**
au moins une unité de transport sans conducteur est réalisée à titre de véhicule d'accompagnement (12a) pour accompagner une personne (16a) en toute sécurité dans la zone de déplacement (14) non accessible et pour assurer ainsi la sécurité, de sorte que la personne (16a) est exceptionnellement autorisée à entrer dans la zone de déplacement (14) non accessible, le véhicule d'accompagnement comprenant en particulier au moins un capteur (28) pour l'acquisition sécurisée de données de capteur.

2. Système de transport (10) selon la revendication 1,
dans lequel
au moins une zone de travail (18) est adjacente à la zone de déplacement (14), zone de travail dans laquelle se trouve une personne (16) afin de reprendre une marchandise depuis une unité de transport (12) sans conducteur ou de remettre une marchandise à l'unité de transport (12) sans conducteur.

3. Système de transport (10) selon la revendication 1 ou 2,
dans lequel
le véhicule d'accompagnement (12a) est réalisé pour accompagner une personne (16a) à une position déterminée dans la zone de déplacement (14).

4. Système de transport (10) selon la revendication 3,
dans lequel
à la position déterminée, une marchandise tombée (24) ou un autre objet à enlever peut être atteint(e).

5. Système de transport (10) selon la revendication 3 ou 4,
dans lequel
la position déterminée est définie par le véhicule d'accompagnement (12a) ou par une commande supérieure du système de transport (10).

6. Système de transport (10) selon l'une des revendications 3 à 5,
dans lequel
la position déterminée est définie par la personne (16a).

7. Système de transport (10) selon l'une des revendications précédentes,
dans lequel
le véhicule d'accompagnement (12a) est réalisé pour venir chercher la personne (16a) dans une zone de travail (18) adjacente à la zone de déplacement (14) ou dans une zone d'accès à la zone de déplacement (14).

8. Système de transport (10) selon l'une des revendications précédentes,
dans lequel
le véhicule d'accompagnement (12a) comprend un dispositif de transport pour transporter la personne (16a) dans la zone de déplacement (14) non accessible.

9. Système de transport (10) selon l'une des revendications précédentes,
dans lequel
le capteur (28) est réalisé pour localiser le véhicule d'accompagnement (12a) dans la zone de déplacement (14).

10. Système de transport (10) selon l'une des revendications précédentes,
dans lequel
le capteur (28) est réalisé pour détecter de manière sûre la personne accompagnée (16a).

11. Système de transport (10) selon l'une des revendications précédentes,
dans lequel
le capteur (28) est réalisé pour surveiller une distance maximale de la personne accompagnée (16a) par rapport au véhicule d'accompagnement (12a).

12. Système de transport (10) selon l'une des revendications précédentes,
dans lequel
plusieurs unités de transport (12) sans conducteur sécurisent ensemble le trajet de la personne (16a) dans la zone de déplacement (14).

13. Système de transport (10) selon la revendication 12,
dans lequel
lesdites plusieurs unités de transport (12, 12a) sans conducteur forment une voie de passage.

14. Procédé pour enlever une marchandise tombée (24) ou un autre objet hors d'une zone de déplacement (14) non accessible aux personnes (16) dans laquelle une pluralité d'unités de transport (12) sans conducteur se déplacent, qui sont dépourvues de système de capteurs destiné à prévenir de manière fiable les accidents avec des personnes (16),
**caractérisé en ce que**
au moins une unité de transport (12) sans conducteur à titre de véhicule d'accompagnement (12a) accompagne en toute sécurité une personne (16a) dans la zone de déplacement (14) non accessible, et
pour sécuriser la personne (16a), la position et/ou l'environnement du véhicule d'accompagnement (12a) et/ou de la personne (16a) est surveillé(e)(s) en toute sécurité à l'aide d'au moins un capteur (28) pour assurer ainsi une sécurité, de sorte que la personne (16a) est exceptionnellement autorisée à entrer dans la zone de déplacement (14) non accessible, en particulier avec recours à au moins un capteur sécurisé (28) du véhicule d'accompagnement (12a).
